# FASCICULE DE BREVET EUROPEEN

(11) **EP 3 325 268 B1**
(45) Date de publication et mention de la délivrance du brevet: **27.03.2019**
(21) Numéro de dépôt: 16747837.9
(22) Date de dépôt: 12.07.2016
(51) Int. Cl.: B32B 7/12, B32B 25/14, B32B 27/08, B32B 27/30, B32B 27/36, B65D 43/00

(54) **FILM MULTICOUCHE POUR EMBALLAGE REFERMABLE EN PET**
MEHRSCHICHTIGE FOLIE FÜR WIEDERVERSCHLIESSBARE PET-VERPACKUNG
MULTILAYER FILM FOR RECLOSABLE PET PACKAGING

(30) Priorité: 17.07.2015 FR 1556805
(43) Date de publication de la demande: 30.05.2018
(73) Titulaire: BOSTIK SA, 93210 La Plaine Saint Denis (FR)
(72) Inventeur: ROBERT, Christophe, 60150 Thourotte (FR); BRESTAZ, Marc, 60200 Compiègne (FR); SALLET, Ludovic, 60150 Chevincourt (FR); PEYRAS-CARRATTE, Jérémie, 60700 Pont Sainte Maxence (FR)
(74) Mandataire: Granet, Pierre
(86) Numéro de dépôt international: PCT/FR2016/051796
(87) Numéro de publication internationale: WO 2017/013330

(56) Documents cités:
- EP-A1- 1 685 954
- WO-A1-97/19867
- WO-A1-2012/045950
- US-A1- 2013 029 553
- DATABASE REGISTRY [Online] CHEMICAL ABSTRACTS SERVICE, COLUMBUS, OHIO, US; XP002757505, extrait de STN Database accession no. 118330-58-8
- DATABASE CA [Online] CHEMICAL ABSTRACTS SERVICE, COLUMBUS, OHIO, US; XP002757506, extrait de stn Database accession no. 127:42368 & JP H09 99653 A (JUJO PAPER CO LTD) 15 avril 1997 (1997-04-15)
- DATABASE CA [Online] CHEMICAL ABSTRACTS SERVICE, COLUMBUS, OHIO, US; XP002757507, extrait de stn Database accession no. 125:100267 & JP H08 112973 A (JUJO PAPER CO LTD) 7 mai 1996 (1996-05-07)

## Description

La présente invention a pour objet un film multicouche comprenant une couche constituée par une composition auto-adhésive thermofusible extrudable et un procédé de fabrication dudit film qui comprend une co-extrusion par soufflage de gaine. Elle concerne également des emballages refermables dont le réceptacle est constitué de poly (téréphtalate d'éthylène), également connu sous la dénomination de PolyEthylèneTéréphtalate (PET), et dont l'opercule est constitué par ledit film multicouche.

On connaît notamment par les demandes WO 2012/045950 et EP 1 685 954 A1 des films multicouches utilisés dans le domaine des emballages refermables. Ces emballages sont utilisés dans l'industrie agroalimentaire et la grande distribution pour conditionner des denrées périssables, notamment des produits frais.

Ces emballages comprennent en général un contenant (ou réceptacle) et un opercule formant couvercle, qui sont fixés l'un à l'autre hermétiquement par thermosoudage. Après une première ouverture de l'opercule et consommation d'une partie du produit alimentaire contenu dans le réceptacle, l'utilisateur peut repositionner l'opercule sur le réceptacle, de manière à refermer l'emballage de façon substantiellement hermétique, et assurer par conséquent, le cas échéant après mise au réfrigérateur, la conservation de la portion restante du produit. Une succession de réouvertures et de refermetures est également possible.

Le réceptacle de ces emballages comprend généralement une feuille de PET, ayant une épaisseur minimale de 100 µm, en général comprise entre 200 et 1000 µm. Cette feuille est thermoformée de manière à présenter un fond plan sur lequel repose le produit alimentaire et un pourtour en forme de bande plane. Ce pourtour, généralement parallèle au fond, est lié par thermosoudage à l'opercule, souple et plan, qui est constitué d'un film multicouche (qualifié également de complexe ou composite) d'épaisseur en général comprise entre 40 et 150 µm, et qui est désigné souvent par la dénomination de film d'operculage.

Lors de l'ouverture de l'emballage par le consommateur, le film d'operculage est séparé manuellement du réceptacle au niveau de la bande plane de son pourtour. Cette opération laisse apparaître une couche adhésive au niveau de ladite bande plane, tant sur la bande de l'opercule que sur la bande du réceptacle qui étaient précédemment liées. Ces 2 couches adhésives (continues ou discontinues) dites « filles » résultent de la rupture d'une couche adhésive initiale ou « mère » ou, éventuellement, de sa séparation (ou décollement) de l'une des 2 couches du film complexe multicouche qui lui sont adjacentes. La couche adhésive initiale est donc une des couches dudit film complexe multicouche qui est lui-même un élément compris dans la feuille composite qui constitue le film d'operculage.

Les 2 couches adhésives filles qui sont présentes, après ouverture de l'emballage, sur les bandes situées sur le pourtour respectif du réceptacle et de l'opercule peuvent être mises en regard l'une de l'autre. Ainsi, il suffit au consommateur de repositionner l'opercule sur le réceptacle, conformément à leur position dans l'emballage avant ouverture, afin de remettre en contact les 2 bandes de couches adhésives filles. Une simple pression manuelle lui permet alors d'obtenir la refermeture de l'emballage.

La substance adhésive qui constitue les couches adhésives mère et filles est donc nécessairement une composition adhésive sensible à la pression (également dénommée composition auto-adhésive ou encore PSA, de l'anglais « Pressure Sensitive Adhesive »).

Dans la plupart des emballages refermables disponibles sur le marché, le film d'operculage est un film multicouche qui comprend :
- une couche A constituée par une composition auto-adhésive thermofusible extrudable,
- une couche mince complexable B, et
- une couche mince thermoscellable et sécable C,
la couche A assurant la liaison entre B et C.

Un tel film offre les propriétés d'ouverture et de refermeture désirées pour l'emballage.

La couche complexable B peut être complexée (ou contre-collée) avec d'autres couches pour la réalisation du film multicouche, par exemple avec une couche rigide pour améliorer la tenue mécanique dudit film.

La couche thermoscellable (terme synonyme de thermosoudable) et sécable C est souvent constituée d'une polyoléfine, plus particulièrement de PolyEthylène (PE) en raison de sa thermoscellabilité à basse température. Elle permet d'assurer :
- lors du conditionnement du produit alimentaire, la fermeture de l'emballage par thermosoudage du film d'operculage sur le réceptacle, au niveau de la bande plane du pourtour, puis
- la première ouverture de l'emballage réalisée manuellement par le consommateur, et obtenue au moyen de la rupture de la zone sécable localisée à la surface de C.

Le déroulement de cette première ouverture commence donc par la rupture de ladite zone sécable, puis se poursuit par la propagation de la rupture le long de la couche adhésive A, et ce jusqu'à la séparation complète de l'opercule du réceptacle. Cette propagation s'opère par rupture de la couche adhésive A dans sa masse (dite rupture cohésive) et/ou par rupture de l'interface de ladite couche A avec l'une et/ou l'autre des 2 couches adjacentes B ou C (dite rupture adhésive).

Le thermosoudage du film d'operculage sur le réceptacle s'effectue au moyen de barrettes (ou de mâchoires) par la mise en contact à chaud et sous pression des zones à assembler, résultant en un assemblage solide par interpénétration des matériaux constitutifs de la couche C du film et de la couche superficielle du pourtour du réceptacle. Une telle opération nécessite une relative proximité des températures de fusion (ou de ramollissement) des matériaux à thermosouder et une certaine similarité de leur nature chimique.

C'est pourquoi il est très difficile, au plan industriel, de thermosouder un film d'operculage multicouche dont la couche soudable et sécable C est constituée d'une polyoléfine (notamment de PolyEthylène ou PE, dont la température de fusion T_{F} peut varier entre 90 et 110°C selon les grades), sur un réceptacle constitué de PET. En effet la température de ramollissement d'un PET amorphe peut varier de 140 à 180°C et la T_{F} d'un PET semi-cristallin peut varier de 220 à 260 °C.

Pour remédier à cette difficulté, le réceptacle des emballages disponibles commercialement est thermoformé à partir d'une feuille multicouche (dite également complexe ou composite) qui comprend, outre la couche de PET, une couche de PE, ladite feuille étant fabriquée par co-extrusion à chaud à une température d'environ 250°C. Le thermoformage est fait de telle sorte que la couche de PE est située à la surface de la bande horizontale du pourtour, du côté opposé au fond plan du réceptacle. Le thermosoudage de la couche C de PE s'opère ainsi commodément dans des conditions industrielles. Toutefois, les industriels qui fabriquent de telles feuilles complexes PET/PE et les mettent en forme par chauffage sont confrontés au problème du recyclage des produits non conformes issus de leurs fabrications, du fait précisément de la présence des 2 matériaux PET et PE non séparables.

Pour remédier à la difficulté de thermosouder une couche soudable et sécable C à base de polyoléfine sur un réceptacle de PET, la demande US2013/0029553 divulgue de manière générale (cf § [0018]) une structure multicouche pour emballage refermable comprenant :
- une couche thermoscellable,
- une couche d'auto-adhésif (également dénommé PSA pour Pressure Sensitive Adhesive),
- une couche de liaison, et
- une couche structurale ;
dans laquelle la couche thermoscellable (cf § [0019]) comprend un PET amorphe (ou APET) ayant une température de fusion supérieure à 200°C, ledit terme de APET désignant dans cette référence (cf § [0052]) un polyester homopolymère ou copolymère semi-aromatique.

Toutefois, le procédé de préparation d'une telle structure multicouche par coextrusion est selon cet art antérieur un vrai défi (cf [0013] et [0056]). En effet, la température minimale de mise en oeuvre par fusion dudit APET est supérieure à 250°C, alors que le PSA, qui est constitutif de la couche adjacente à la couche thermoscellable en APET, présente un risque de dégradation lors de sa mise en oeuvre à une telle température.

La présente invention a pour but d'éviter un tel risque, en proposant un film multicouche utilisable pour un emballage à ouverture et refermeture facile, dont la couche thermosoudable et sécable C peut être thermosoudée sur un réceptacle constitué de PET, ledit film pouvant en outre être fabriqué par un procédé de co-extrusion par soufflage de gaine mettant en oeuvre, notamment au niveau de la tête d'extrusion, une température plus basse, et plus particulièrement une température inférieure à 250°C, de préférence inférieure à 220°C, et encore plus préférentiellement inférieure à 200°C.

La mise en oeuvre du procédé de co-extrusion à une température plus basse est également avantageuse en termes d'économie d'énergie et de productivité du procédé comme, par exemple, un moindre temps pour le démarrage de la ligne de production.

Un autre but de la présente invention est donc de proposer un film multicouche utilisable comme opercule d'emballage refermable, dont la couche thermosoudable et sécable permet le thermosoudage dudit opercule sur un réceptacle constitué à 100 % de PET.

Un autre but de la présente invention est donc de proposer un film multicouche qui, une fois thermosoudé sur PET, présente :
- une force de 1^{ère} ouverture qui soit adaptée à une ouverture facile de l'emballage par le consommateur, et
- une force de 2^{ème} ouverture qui assure, après la 1^{ère} refermeture de l'emballage par le consommateur, une refermeture substantiellement hermétique.

Un autre but de la présente invention est de proposer un film multicouche susceptible d'être fabriqué par co-extrusion à partir de matières premières conditionnées sous la forme de granulés, notamment par co-extrusion par soufflage de gaine, en vue de la fabrication d'un emballage refermable.

Il a à présent été trouvé que ces buts peuvent être obtenus, en totalité ou en partie, au moyen du film multicouche selon l'invention qui est décrit ci-après.

La présente invention a donc pour objet en premier lieu un film multicouche comprenant :
- une couche adhésive A d'épaisseur allant de 7 à 50 µm et constituée par une composition auto-adhésive thermofusible extrudable a qui a un indice d'écoulement (ou MFI), mesuré pour une température de 190°C et un poids total de 2,16 kg, allant de 0,01 à 200 g/10 minutes et qui comprend, sur la base du poids total de ladite composition a :
   - de 40 à 70 % en poids d'une composition a1 de copolymères blocs styréniques comprenant au moins un bloc élastomère, ladite composition a1 étant constituée, sur la base de son poids total :
      - de 30 à 90 % en poids d'au moins un copolymère dibloc choisi dans le groupe comprenant les SI, SBI, SIB, SB, SEB, SEP, et
      - de 10 à 70 % en poids d'au moins un copolymère tribloc choisi dans le groupe comprenant les SIS, SIBS, SBS, SEBS et SEPS ;
         la teneur en motifs styréniques totale de ladite composition a1 variant de 10 à 40 % en poids sur la base du poids total de a1 ; et
   - de 30 à 60 % en poids d'une ou plusieurs résines tackifiantes a2 ayant une température de ramollissement comprise entre 5 et 140 °C ;
- une couche mince complexable B constituée d'un matériau thermoplastique b; et
- une couche thermoscellable et sécable C ;
   les couches B et C étant liées entre elles par la couche A ; et
   ledit film étant caractérisé en ce que la couche C est constituée d'une composition c comprenant, sur la base du poids total de c, une teneur en poids d'au moins 95 % d'au moins un copolyester linéaire C1 obtenu par polycondensation d'une composition m de monomères comprenant :
   - au moins un diol (i),
   - au moins un composé (ii) choisi parmi l'acide téréphtalique ou un de ses dérivés diesters, éventuellement substitué par un radical alkyle, et
   - au moins un composé (iii) choisi parmi un diacide carboxylique aromatique ou aliphatique ou un de ses dérivés diesters ou anhydrides ;
les quantités des monomères (i), (ii) et (iii) mises en oeuvre dans la polycondensation étant telles que la température de ramollissement de C1 est inférieure à 190 °C.

De manière surprenante par rapport à l'enseignement du document US2013/0029553, il a été trouvé que certains copolyesters linéaires, dont la température de ramollissement est inférieure à 190°C, pouvaient être mis en oeuvre par co-extrusion avec les matériaux constitutifs des couches adjacentes du film multicouche selon l'invention, à des températures bien inférieures à 250°C, et plus particulièrement à des températures inférieures à 220°C, de préférence inférieures à 200°C, et encore plus préférentiellement inférieures à 180°C. Il en résulte qu'il est possible de préparer ledit film par un procédé industriel de coextrusion, sans risque de dégradation ou de perturbation de la couche adjacente auto-adhésive A. De plus, ledit film présente, après son incorporation dans un emballage refermable dont le réceptacle est constitué de PET, une ouverture facile par le consommateur, suivie le cas échéant d'une refermeture substantiellement hermétique.

### Description de la composition c de la couche C :

La couche thermoscellable et sécable C est constituée d'une composition c qui comprend, sur la base du poids total de c, une teneur en poids d'au moins 95 % d'au moins un copolyester linéaire C1 dont la température de ramollissement est inférieure à 190°C.

La température (ou point) de ramollissement est également désignée dans le domaine des adhésifs par les termes de « température Bille/Anneau » ou encore, par l'expression anglaise, « softening point Ring and Ball » souvent abrégée en R & B.

Cette température est déterminée conformément au test normalisé ASTM E 28 dont le principe est le suivant. Un anneau en laiton de diamètre environ 2 cm est rempli du copolyester (ou résine) à tester, à l'état fondu. Après refroidissement à température ambiante, l'anneau et la résine solide sont placés horizontalement dans un bain de glycérine thermostaté dont la température peut varier de 5° C par minute. Une bille d'acier de diamètre environ 9,5 mm est centrée sur le disque de résine solide. La température de ramollissement est -durant la phase de montée en température du bain à raison de 5°C par minute- la température à laquelle le disque de copolyester solide, après son passage à l'état de fluide visqueux (correspondant à sa fusion, dans le cas d'un copolyester semi-cristallin), flue d'une hauteur de 25,4 mm sous le poids de la bille.

Dans le cas d'un copolyester semi-cristallin, la température de ramollissement ainsi obtenue est donc supérieure à la température de fusion, telle que mesurée par les techniques usuelles de calorimétrie différentielle à balayage (dénommées souvent par le sigle anglais de DSC pour Differential Scanning Calorimetry).

De préférence, la température de ramollissement du copolyester linéaire C1 est inférieure à 180°C, et plus préférentiellement inférieure à 175°C.

La température de ramollissement du copolyester linéaire C1 est en général supérieure à 95°C, et, le plus souvent, supérieure à 110°C.

Le copolyester linéaire C1 est un copolymère statistique obtenu par polycondensation d'une composition m de monomères comprenant :
- au moins un diol (i),
- au moins un composé (ii) choisi parmi l'acide téréphtalique ou un de ses dérivés diesters, éventuellement substitué par un radical alkyle, et
- au moins un composé (iii) choisi parmi un diacide carboxylique aromatique ou aliphatique ou un de ses dérivés diesters ou anhydrides.

On peut choisir le diol (i) parmi l'éthylène glycol, le diéthylène glycol, le triméthylène glycol, l'hexaméthylène glycol, le propylène glycol (ou propane-1,2-diol), le propane-1,3-diol, le butanediol (-1,4, -1,3 ou -1,2), le néopentyl glycol, le 2-méthyl-1,3-propane diol, l'hexane diol, le triméthylolpropane ou encore le cyclohexanedimethanol.

Le composé (ii) est choisi parmi l'acide téréphthalique ou un de ses dérivés diesters comme le diméthyl téréphthalate.

On peut par exemple choisir le composé (iii) parmi l'acide isophtalique, l'acide adipique, l'acide azélaïque, l'acide sébacique, l'acide cyclohexanedicarboxylique, l'acide dodécanedicarboxylique, l'acide 1,10-décanedicarboxylique, l'acide succinique, l'anhydride phtalique, l'anhydride maléïque.

Des copolyesters linéaires C1 convenant avantageusement au film multicouche selon l'invention, en raison de leur température de ramollissement, sont obtenus par polycondensation d'une composition m constituée, sur la base de teneurs exprimées en % molaire pour 100 moles de monomères, par :
- environ 50 % de diol (i),
- de 10 à 38 %, de préférence de 10 à 34 %, de composé (ii), et
- de 12 à 40 %, de préférence de 16 à 40 %, de composé (iii).

Des compositions m particulièrement avantageuses sont obtenues en utilisant comme diol (i) l'éthylène glycol.

Les copolyesters linéaires C1 ainsi obtenus ont une masse molaire moyenne en poids Mw comprise dans un domaine allant de 20 à 100 kDa. En l'absence d'indication contraire, les masses molaires moyennes en poids Mw qui sont indiquées dans le présent texte sont exprimées en dalton (Da) et sont déterminées par Chromatographie par Perméation de Gel ou Chromatographie d'Exclusion Stérique, la colonne étant calibrée avec des étalons de polystyrène.

Les copolyesters linéaires C1 peuvent avoir une structure amorphe ou semi-cristalline selon la teneur en monomères de la composition m. Lorsqu'ils possèdent une structure semi-cristalline, la température de fusion des copolyesters linéaires C1 est généralement inférieure à 195°C.

Le copolyester linéaire C1 compris dans la composition c constitutive de la couche thermoscellable et sécable C est obtenu par polycondensation de la composition m comprenant les monomères pré-cités.

Lorsque certains parmi les monomères (ii) et éventuellement (iii) sont des dérivés diesters, comme par exemple des dérivés diesters méthyliques, lesdits monomères sont, dans une 1^{ère} étape, mélangés avec un ou plusieurs monomères diols (i), ledit mélange étant porté à une température pouvant aller jusqu'à 190°C, de manière à réaliser, de préférence en présence d'un catalyseur à base de titane ou de zinc, une réaction de transestérification et éliminer le méthanol formé. Dans une 2^{ème} étape, les monomères (ii) et éventuellement (iii) qui sont des diacides sont ajoutés, en mélange avec un ou plusieurs monomères diols (i), le milieu réactionnel étant porté à une température pouvant aller jusqu'à 230°C, de manière à réaliser la réaction d'estérification et éliminer l'eau formée. Enfin, dans une 3^{ème} étape, la pression est abaissée à une valeur inférieure à environ 5 mbar, et le milieu réactionnel est porté à une température plus élevée, jusqu'à une valeur voisine de 250°C, afin d'augmenter la longueur des chaînes des copolyesters pour atteindre une Mw comprise dans le domaine indiqué précédemment.

Outre le copolyester linéaire C1, la composition c constitutive de la couche thermoscellable et sécable C du film multicouche selon l'invention, comprend également jusqu'à 5 %, de préférence jusqu'à 0,5 % en poids, d'un ou plusieurs additifs tels que des agents anti-bloquants ou glissants, comme par exemple l'érucamide, l'oléamide, le behenamide, le stéaramide, le palmitamide, l'éthylene bi-stéaramide, l'éthylene bis-oléamide, de la silice ou encore du talc.

### Description de la composition b de la couche B :

La couche mince complexable B comprise dans le film multicouche selon l'invention est constituée d'un matériau thermoplastique b qui peut être avantageusement choisi parmi :
- le polyéthylène (PE),
- le polypropylène (PP),
- un copolymère à base d'éthylène et de propylène,
- le polyamide (PA),
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- le polyfluorure de vinylidène (PVDF),
- un polymère d'acide lactique (PLA), ou
- un polyhydroxyalkanoate (PHA).

La couche B peut être complexée (ou contre-collée) avec d'autres couches pour la réalisation de l'emballage, par exemple avec une couche rigide pour la réalisation du réceptacle.

### Description de la composition a de la couche A :

La composition a est une composition auto-adhésive thermofusible extrudable dont l'indice d'écoulement (ou MFI) peut varier de 0,01 à 200 g/10 minutes.

L'indice d'écoulement (ou Melt Flow Index MFI) est mesuré à 190°C et pour un poids total de 2,16 kg, conformément à la condition d) de la norme ISO 1133. Le MFI est la masse de composition (préalablement placée dans un cylindre vertical) qui s'écoule en 10 minutes au travers d'une filière de diamètre 2,095 mm, sous l'effet d'une pression exercée par un piston chargé ayant le poids total de 2,16 kg. En l'absence de mention contraire les valeurs de MFI indiquées dans le présent texte ont été mesurées dans ces mêmes conditions.

Les compositions auto-adhésives thermofusibles a ayant un MFI allant de 2 à 70 g/10 minutes sont plus particulièrement préférées.

La composition a comprend, sur la base du poids total de ladite composition a :
- de 40 à 70 % en poids d'une composition a1 de copolymères blocs styréniques comprenant au moins un bloc élastomère, ladite composition a1 étant constituée, sur la base de son poids total :
- de 30 à 90 % en poids d'au moins un copolymère dibloc choisi dans le groupe comprenant les SI, SBI, SIB, SB, SEB, et SEP, et
- de 10 à 70 % en poids d'au moins un copolymère tribloc choisi dans le groupe comprenant les SIS, SIBS, SBS, SEBS et SEPS ;
   la teneur en motifs styréniques totale de ladite composition a1 variant de 10 à 40 % en poids sur la base du poids total de a1 ; et
   - de 30 à 60 % en poids d'une ou plusieurs résines tackifiantes a2 ayant une température de ramollissement comprise entre 5 et 140 °C.

La composition a1 qui est comprise dans la composition HMPSA a constitutive de la couche adhésive A comprend un ou plusieurs copolymères blocs styréniques, de masse molaire moyenne en poids Mw généralement comprise entre 50 kDa et 500 kDa.

Ces copolymères blocs styréniques sont constitués de blocs de différents monomères polymérisés incluant au moins un bloc polystyrène, et sont préparés par des techniques de polymérisation radicalaire.

En l'absence d'indication contraire, les masses molaires moyennes en poids M_{w} qui sont données dans le présent texte sont exprimées en dalton (Da) et sont déterminées par Chromatographie par Perméation de Gel, la colonne étant calibrée avec des étalons de polystyrène.

Les copolymères tribloc incluent 2 blocs polystyrène et un bloc élastomère. Ils peuvent revêtir des structures diverses : linéaire, en étoile (également dénommée radiale), branchée ou encore en peigne. Les copolymères dibloc incluent 1 bloc polystyrène et 1 bloc élastomère.

Les copolymères tri-bloc ont pour formule générale :

ABA (I)

dans laquelle :
- A représente un bloc non élastomère styrénique (ou polystyrène), et
- B représente un bloc élastomère qui peut être :
   - le polyisoprène. Le copolymère bloc a alors pour structure : polystyrène-polyisoprène-polystyrène, et pour dénomination : SIS ;
   - le polyisoprène suivi d'un bloc polybutadiène. Le copolymère bloc a alors pour structure : polystyrène-polyisoprène-polybutadiène-polystyrène, et pour dénomination : SIBS
   - le polybutadiène. Le copolymère bloc a alors pour structure : polystyrène- polybutadiène- polystyrène, et pour dénomination : SBS ;
   - le polybutadiène hydrogéné totalement ou en partie. Le copolymère bloc a alors pour structure: polystyrène-poly(éthylènebutylène)- polystyrène et pour dénomination : SEBS ;
   - le polyisoprène hydrogéné totalement ou en partie. Le copolymère bloc a alors pour structure : polystyrène-poly(éthylènepropylène)- polystyrène et pour dénomination : SEPS.

Les copolymères di-bloc ont pour formule générale :

A-B (II)

dans laquelle A et B sont tels que définis précédemment.

Lorsque la composition a1 comprend plusieurs copolymères styréniques triblocs, ces derniers étant choisis dans le groupe comprenant les SIS, les SBS, les SEPS, les SIBS, les SEBS, il est bien entendu que lesdits triblocs peuvent appartenir à une seule ou à plusieurs de ces 5 familles de copolymères. Il en est de même, *mutatis mutandis,* pour les copolymères diblocs.

On préfère utiliser une composition a1 comprenant un copolymère tribloc et un copolymère dibloc ayant le même bloc élastomère, en raison notamment du fait que de tels mélanges sont disponibles commercialement.

Selon une variante de réalisation particulièrement préférée, la teneur en copolymère dibloc dans la composition a1 peut varier de 40 à 90 %, de préférence de 50 à 90 %, encore plus préférentiellement de 50 à 60 %.

Selon un mode de réalisation particulièrement avantageux de la composition a constitutive de la couche A comprise dans le film multicouche selon l'invention, la composition a1 est constituée d'un copolymère tribloc SIS et d'un copolymère dibloc SI. Dans ce cas la teneur en motifs styréniques totale de la composition a1) varie de préférence de 10 à 20%.

Les copolymères triblocs compris dans la composition a1 ont de préférence une structure linéaire.

Les copolymères blocs styréniques à bloc élastomère, notamment de type SI et SIS, utilisables dans la composition a) sont disponibles commercialement, souvent sous la forme de mélanges tribloc/dibloc.

Le Kraton® D1113BT de la société Kraton et le Quintac® 3520 de la société Zeon Chemicals sont des exemples de compositions a1 constituées de SIS et SI.

Le Kraton® D1113BT est une composition dont la teneur en motifs styréniques globale est de 16 %, et qui est constituée de 45 % de copolymère tribloc SIS linéaire de M_{w} environ 250 kDa, et de 55 % de copolymère dibloc SI de M_{w} environ 100 kDa. Le Quintac® 3520 est une composition qui est constituée, respectivement, de 22 % et de 78 % de tribloc SIS linéaire (M_{w} environ 300 kDa) et de dibloc SI (M_{w} environ 130 kDa), et dont la teneur totale en motifs styréniques est de 15 %.

La composition HMPSA a constitutive de la couche A comprend également une ou plusieurs résines tackifiantes a2 ayant une température de ramollissement comprise entre 5 et 140 °C.

La ou les résines tackifiantes a2 utilisables ont des masses molaires moyennes en poids M_{w} généralement comprises entre 300 et 5000 Da et sont choisies notamment parmi :
- (i) les colophanes d'origine naturelle ou modifiées, telles que par exemple la colophane extraite de la gomme de pins, la colophane de bois extraite des racines de l'arbre et leurs dérivés hydrogénés, deshydrogénés, dimérisés, polymérisés ou estérifiés par des monoalcools ou des polyols comme le glycérol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

Selon une variante préférée, on utilise des résines aliphatiques appartenant aux catégories (ii) ou (iii) pour lesquelles on peut citer comme exemples de résine disponible commercialement :
(ii) l'Escorez® 1310 LC disponible auprès de Exxon Chemicals qui est une résine obtenue par polymérisation d'un mélange d'hydrocarbures aliphatiques insaturés ayant environ 5 atomes de carbone, et qui possède une température de ramolissement de 94°C et un Mw d'environ 1800 Da ; l'Escorez® 5400 également de la société Exxon Chemicals qui est une résine obtenue par polymérisation, puis hydrogénation d'un mélange d'hydrocarbures aliphatiques insaturés ayant environ 9 ou 10 atomes de carbone et qui possède une température de ramolissement de 100°C et un Mw d'environ 570 Da ;
(iii) la Dercolyte® S115 disponible auprès de la société « Dérivés Résiniques et Terpéniques ou DRT) qui une résine terpène ayant une température de ramollissement de 115°C et un Mw d'environ 2300 Da.

Selon une variante préférée, la composition HMPSA a constitutive de la couche A est constituée essentiellement :
- de 40 à 70 % de la composition a1 de copolymères blocs styréniques ; et
- de 30 à 60 % d'au moins une résine tackifiante a2 ayant une température de ramollissement comprise entre 5 et 140 °C.

Selon une autre variante préférée, la composition HMPSA a constitutive de la couche A comprend ou est constituée essentiellement :
- de 50 à 70 % de la composition a1 de copolymères blocs styréniques ; et
- de 30 à 50 % d'au moins une résine tackifiante a2 ayant une température de ramollissement comprise entre 5 et 140 °C.

Selon encore une autre variante préférée, la composition HMPSA a constitutive de la couche A peut également comprendre, outre la composition a1 et la (ou les) résines tackifiantes a2, de 0,1 à 2 % d'un ou plusieurs stabilisants (ou anti-oxydant). Ces composés sont introduits pour protéger la composition d'une dégradation résultant d'une réaction avec de l'oxygène qui est susceptible de se former par action de la chaleur, de la lumière ou de catalyseurs résiduels sur certaines matières premières telles que les résines tackifiantes. Ces composés peuvent inclure des anti-oxydants primaires qui piègent les radicaux libres et sont généralement des phénols substitués comme l'Irganox® 1010 de CIBA. Les anti-oxydants primaires peuvent être utilisés seuls ou en combinaison avec d'autres anti-oxydants tels que des phosphites comme l'Irgafos® 168 également de CIBA, ou encore avec des stabilisants UV tels que des amines.

La composition a peut également comprendre un plastifiant, mais dans une quantité ne dépassant pas 5 %. On peut utiliser comme plastifiant une huile paraffinique et naphténique (comme le Primol® 352 de la société ESSO) comprenant éventuellement des composés aromatiques (comme le Nyflex 222B).

La composition a peut enfin comprendre des charges minérales ou organiques, des pigments ou des colorants.

La composition adhésive a peut être préparée, sous la forme de granulés de taille comprise entre 1 et 10 mm, de préférence entre 2 et 5 mm, par simple mélange de ses ingrédients à chaud, entre 150 et 200°C, de préférence à environ 160°C, au moyen d'une extrudeuse à 2 vis muni d'un outil de découpe du produit extrudé en sortie de la filière

Outre les couches A, B et C, le film multicouche selon l'invention peut comprendre également d'autres couches minces nécessaires à la réalisation de l'emballage, comme par exemple :
- une couche intermédiaire (également qualifiée de liaison) D, reliant la couche A à la couche B, et/ou une couche de liaison E, reliant la couche A à la couche C, ou
- une couche rigide nécessaire à la tenue mécanique du réceptacle, ou
- une couche imprimable, ou encore
- une couche à effet barrière contre l'oxygène, la vapeur d'eau ou bien le monoxyde de carbone.

Les couches de liaison D et E sont constituées de compositions identiques ou différentes de polymères. Lesdits polymères sont généralement choisis parmi des homopolymères ou copolymères de polyéthylène, des homopolymères ou copolymères de polypropylène, des copolymères d'éthylène et comonomères polaires, ou encore des copolymères de polyoléfines greffés. Il est fait référence pour plus de détails sur la composition des couches de liaison au document US2013/0029553.

Les matériaux utilisables pour constituer les autres couches optionnelles peuvent être identiques ou différents et comprennent en général des polymères thermoplastiques qui peuvent être choisis parmi les polymères cités précédemment pour la couche B.

L'épaisseur de la couche A peut varier, de préférence, de 8 à 25 µm, encore plus préférentiellement de 10 à 20 µm.

L'épaisseur des couches de liaison D et E est quant à elle généralement comprise entre 1 et 10 µm, de préférence entre 2 et 8 µm.

L'épaisseur des 2 couches B et C, ainsi que des autres couches éventuellement mises en oeuvre dans le film multicouche selon l'invention est susceptible de varier dans un large domaine allant de 5 à 150 µm.

Selon une variante de réalisation, le film multicouche selon l'invention est un film à 5 couches constitué par la couche adhésive A, les 2 couches intermédiaires D et E et les 2 couches externes B et C, selon l'enchaînement B/D/A/E/C dans lequel le signe «/» signifie que les faces des couches concernées sont en contact direct.

Selon une autre variante de réalisation, le film multicouche selon l'invention est un film à 3 couches constitué par la couche adhésive A et les 2 couches externes B et C, selon l'enchaînement B/A/C.

La présente invention concerne également un procédé de fabrication du film multicouche tel que défini précédemment, caractérisé en ce qu'il comprend la co-extrusion de la composition auto-adhésive thermofusible a et des compositions b et c, à une température comprise entre 150°C et 200°C.

Selon une variante dudit procédé, la co-extrusion est réalisée par la mise en oeuvre d'une filière rectangulaire.

Selon une variante préférée, la co-extrusion est réalisée par un procédé de soufflage de gaine (dit encore soufflage de bulle), ledit procédé comprenant :
(i) l'introduction, dans des extrudeuses séparées, des compositions et matériaux constitutifs des couches A, B, C, et le cas échéant D et E, sous la forme de granulés de taille comprise entre 1 et 10 mm, de préférence entre 2 et 5 mm, puis
(ii) la transformation par chauffage desdits granulés à l'état de liquide visqueux, puis
(iii) le passage des flux correspondants à travers une tête d'extrusion comprenant un ensemble de filières annulaires coplanaires et concentriques portées chacune à une température inférieure à 200°C, de manière à former une bulle tubulaire à plusieurs couches, dont l'ordre des couches correspond à celui désiré pour le film final, puis
(iv) l'expansion radiale (relativement au plan des filières annulaires) et l'étirement (dans le sens perpendiculaire audit plan) de la bulle, puis
(v) le refroidissement de ladite bulle.

Les caractéristiques géométriques des filières, de même que les paramètres du procédé tels que le taux d'expansion radiale et la vitesse d'étirement sont fixés de manière à obtenir l'épaisseur désirée pour les différentes couches constitutives du film multicouche. Il est notamment fait référence pour plus ample description du procédé de co-extrusion par soufflage de bulle à la demande de brevet US2013/0029553.

Selon une variante préférée du procédé selon l'invention, la tête d'extrusion mise en oeuvre à l'étape (iii) est une tête d'extrusion monobloc, dans laquelle les filières annulaires sont portées à une seule et même température inférieure à 200°C. De façon avantageuse, de telles têtes d'extrusion équipent la grande majorité des dispositifs de co-extrusion par soufflage de gaine disponibles sur le marché, rendant ainsi le procédé plus facile à mettre en oeuvre.

De préférence la température de co-extrusion varie dans un intervalle allant de 170 à 190 °C.

La présente invention concerne encore un emballage refermable comprenant :
- un réceptacle à base de PET qui est constitué ou bien de PET amorphe ou bien d'un système bicouche de PET amorphe et de PET semi-cristallin, ledit réceptacle présentant un fond plan et un pourtour en forme de bande plane, et
- un opercule constitué du film multicouche tel que défini précédemment, dont la couche thermoscellable et sécable (C) est thermoscellée sur le pourtour du réceptacle, au contact de PET amorphe.

Ledit emballage est confectionné par les industriels de l'agro-alimentaire en plaçant le produit alimentaire à conditionner sur le fond plan du réceptacle, puis en fixant le film multicouche selon l'invention sur le pourtour dudit réceptacle par thermosoudage sur le PET amorphe à une température comprise entre 110 et 160 °C.

Les exemples suivants sont donnés à titre purement illustratif de l'invention, et ne sauraient en aucun cas être interprétés pour en limiter la portée.

### Exemple A (référence) : composition auto-adhésive thermofusible extrudable

On prépare, sous la forme d'un liquide visqueux, une composition constituée, sur la base de % poids/poids, de 59,5 % de Kraton® D1113BT, 25 % d'Escorez ® 1310 LC, 15 % de Dercolyte® S115 et 0,5 % d'Irganox® 1010 par simple mélange des ingrédients à 160°C au moyen d'une extrudeuse à 2 vis.

On mesure un MFI de 57 g/10 minutes.

### Exemple B (référence) : film tricouche BAC comprenant une couche A constituée de la composition de l'exemple A et une couche thermoscellable et sécable C constituée de LDPE :

Ce film tricouche est fabriqué au moyen d'un dispositif pilote de co-extrusion par soufflage de bulle fonctionnant en continu muni d'une tête d'extrusion monobloc portée à une température de 190°C dans lequel 3 extrudeuses sont alimentées :
- pour l'une, par la composition de l'exemple A, et
- pour les 2 autres, par du PolyEthylène basse densité (ou LDPE) ;
les 3 compositions étant sous la forme de granulés de taille d'environ 4 mm.

Les paramètres du procédé sont ajustés de manière à fabriquer un film tricouche constitué :
- en tant que couche A, d'une couche d'épaisseur 15 µm constituée de la composition auto-adhésive thermofusible extrudable de l'exemple A,
- en tant que couche mince complexable B, d'une couche d'épaisseur 30 µm constituée de LDPE ;
- en tant que couche thermoscellable et sécable C, d'une couche d'épaisseur 15 µm constituée également de LDPE.

Parmi les paramètres usuellement fixés, on peut citer un taux d'expansion radiale de la bulle égal à 3, une vitesse d'étirement de 7 m/minute et un débit global de 11 kg/heure.

Le film tricouche ainsi obtenu a une épaisseur totale de 60 µm, une longueur de 50 m et est conditionné sous la forme d'une bobine de 250 mm de laize.

Il est soumis aux tests B.1. et B.2. décrits ci-après.

### Test B.1. : Mesure de la force de première ouverture par pelage en T à 23°C du film tricouche préalablement thermosoudé sur un complexe PET/PE :

On découpe dans le film tricouche obtenu précédemment un échantillon sous la forme d'une feuille rectangulaire au format A4 (21 x 29,7 cm).

La face externe de la couche complexable B de cet échantillon est :
- dans un premier temps soumise à un traitement de surface Corona (au moyen d'un plasma), puis
- dans un second temps complexée (autrement dit contrecollée ou laminée) sur un film PET d'épaisseur 23 µm au moyen d'un adhésif solvanté à base de polyuréthane et à l'aide d'un appareil d'enduction du type barre de Mayer.

La feuille rectangulaire est alors placée sous presse pendant 24h.

On découpe ensuite dans cette feuille rectangulaire des éprouvettes rectangulaires E1 de 10 cm de longueur et 2 cm de largeur.

On découpe par ailleurs, dans une plaque rigide constituée d'une feuille de PET d'épaisseur environ 200 µm recouverte d'une couche de PE, des éprouvettes rectangulaires E2 de 10 cm de longueur et 2 cm de largeur.

Les 2 éprouvettes E1 et E2 sont alors placées en regard l'une de l'autre, de manière à ce que la couche thermoscellable et sécable de E1 soit en contact de la couche de PE de E2.

On procède alors à un scellage partiel, au moyen de deux mâchoires chauffantes à 130°C, appliquées sous une pression de 6 bar pendant 1 seconde, de manière à obtenir une zone scellée de forme rectangulaire (8 cm de longueur et 1 cm de largeur). Ladite zone scellée est disposée dans le sens de la longueur et en contact avec un des petits côtés des éprouvettes rectangulaires E1 et E2 ainsi jointes, afin de laisser à l'autre petit côté desdites éprouvettes une bande de film d'environ 2 cm de longueur provenant de E1, libre et non scellée sur l'extrémité de la plaque rigide de E2 située en regard.

La bande de film libre de E1 et l'extrémité de la plaque rigide de E2 sont fixées sur deux dispositifs d'attache (appelés mors) reliés, respectivement, à une partie fixe et une partie mobile d'un appareil de traction qui sont situées sur un axe vertical. Cet appareil de traction est un dynamomètre.

Alors qu'un mécanisme d'entraînement communique à la partie mobile une vitesse uniforme de 300 mm/minute conduisant au pelage des 2 éprouvettes E1 et E2 scellées, les extrémités se déplacent progressivement selon un axe vertical en formant un angle de 180°. Un capteur de force relié à ladite partie mobile mesure la force supportée par l'éprouvette ainsi maintenue. La mesure est réalisée dans une salle climatique maintenue à une température de 23°C.

La force obtenue est indiquée dans le Tableau 1.

### Test B.2. Mesure de la force de deuxième ouverture par pelage en T à 23°C du film tricouche thermosoudé sur un complexe PET/PE :

Les 2 parties de l'éprouvette précédente sont, après pelage, repositionnées en regard l'une de l'autre et mises en contact manuellement. Elles sont alors soumises à une pression exercée au moyen d'un rouleau de masse 2 kg avec lequel on procède à un mouvement d'aller-retour selon une direction parallèle à la longueur de l'éprouvette.

On obtient ainsi une éprouvette de traction de forme identique à celle préparée pour le test de pelage précédent qui est alors répété.

La force obtenue est indiquée dans le Tableau 1.

### Exemple 1 : film tricouche BAC comprenant une couche A constituée de la composition de l'exemple A et une couche C thermoscellable et sécable selon l'invention :

On prépare tout d'abord, selon le mode opératoire en 3 étapes indiqué ci-après, un copolyester linéaire amorphe C1 obtenu par une réaction de polycondensation d'une composition m de monomères constituée, sur la base du nombre total de moles de monomères, de :
- 50 % en moles de monoéthylène glycol,
- 30 % en moles de diméthyl téréphtalate, et
- 20 % en moles d'acide isophthalique.

### 1^{ère} étape :

Dans un réacteur fermé de 1 litre, équipé d'une agitation, d'une colonne de distillation, de moyens de chauffe, d'un thermomètre et relié à une pompe à vide, on introduit 100 g de monoéthylène glycol (1,61 mole), 291 g de diméthyl téréphtalate (1,5 mole) et 0,19 g de catalyseur à base de titane (de formule (nBuO)₄Ti) et 0,05 g de catalyseur à base de zinc (acétate de zinc). L'ensemble est chauffé de température ambiante à 190°C durant 5 heures pour éliminer le méthanol formé.

### 2^{ème} étape :

On introduit ensuite à 190°C dans le réacteur de la 1^{ère} étape et sous balayage d'azote, 70 g de monoéthylène glycol (1,13 mole) et 166 g d'acide isophtalique (1 mole). La réaction de polycondensation est poursuivie pendant 5 heures de 190 °C à 230°C pour éliminer l'eau formée. L'avancement de la réaction est suivi par mesure de l'indice d'acide IA exprimé en mg KOH/g.

### 3^{ème} étape :

On porte le mélange réactionnel de la 2^{ème} étape à une température de 250°C sous une pression d'environ 2 mbar pendant 10 heures afin d'accroître la masse moléculaire.

Le copolyester linéaire amorphe C1 obtenu a une masse moléculaire Mw de 35 kDa. Sa température de ramollissement est de 175°C.

Le copolyester C1 ainsi obtenu est mis sous la forme de granulés de taille environ 4 mm après extrusion, et est utilisé comme matériau constitutif de la couche C du film tricouche BAC.

On fabrique, en reproduisant le procédé de l'exemple B, et notamment en portant la température de la tête d'extrusion monobloc à la même température de 190°C, un film tricouche BAC constitué :
- en tant que couche A, d'une couche d'épaisseur 15 µm constituée de la composition auto-adhésive thermofusible extrudable de l'exemple A,
- en tant que couche mince complexable B, d'une couche d'épaisseur 30 µm constituée de LDPE ;
- en tant que couche thermoscellable et sécable C, d'une couche d'épaisseur 8 µm constituée également du copolyester linéaire amorphe C1 préparé comme indiqué ci-dessus.

Le film tricouche ainsi obtenu a une épaisseur totale de 53 µm, une longueur de 50 m et est conditionné sous la forme d'une bobine de 250 mm de laize.

On répète alors les tests B.1. et B.2. de l'exemple B en utilisant comme plaque rigide pour confectionner les éprouvettes E2 une plaque constituée exclusivement d'une feuille de PET amorphe, d'épaisseur environ 200 µm (non recouverte d'une couche de PE).

Les forces obtenues sont indiquées dans le Tableau 1.

**Tableau 1**

| | Exemple B (référence) | Exemple 1 | Exemple 2 |
|---|---|---|---|
| Matériau constitutif de la plaque rigide de l'éprouvette E2 mentionnée au test B1 | PET/PE | PET | PET |
| Force de 1^{ère} ouverture (N/cm) | 4,0 | 5,4 | 5 |
| Force de 2^{ème} ouverture (N/cm) | 1,2 | 2 | 1,1 |

### Exemple 2 : film tricouche BAC comprenant une couche A constituée de la composition de l'exemple A et une couche C thermoscellable et sécable selon l'invention :

On prépare tout d'abord, selon le mode opératoire en 2 étapes indiqué ci-après, un copolyester linéaire amorphe C1 obtenu par une réaction de polycondensation d'une composition m de monomères constituée, sur la base du nombre total de moles de monomères, de :
- 50 % en moles de monoéthylène glycol,
- 30 % en moles d'acide téréphtalique, et
- 20 % en moles d'acide azélaïque.

### 1^{ère} étape :

Dans un réacteur fermé de 1 litre, équipé d'une agitation, d'une colonne de distillation, de moyens de chauffe, d'un thermomètre et relié à une pompe à vide, on introduit 100 g de monoéthylène glycol (1,61 mole), 142 g d'acide téréphtalique (0.85 mole), 107 g d'acide azélaïque (0.57 mol) et 0.0011 g de catalyseur à base de titane (de formule (2-EtHexO)₄Ti) et 0.04 g de catalyseur à base de germanium (dioxyde de germanium). L'ensemble est chauffé de 170°C à 230°C durant 5 heures pour éliminer l'eau formée.

L'avancement de la réaction est suivi par mesure de l'indice d'acide IA exprimé en mg KOH/g.

### 2ème étape :

On porte le mélange réactionnel de la 1ère étape à une température de 250°C sous une pression d'environ 2 mbar pendant 10 heures afin d'accroître la masse moléculaire.

Le copolyester linéaire amorphe C1 obtenu a une masse moléculaire Mw de 75 kDa. Sa température de ramollissement est de 150°C.

On répète alors, avec le copolyester linéaire amorphe C1 ainsi obtenu, l'exemple 1.

Les forces obtenues à l'issue des tests B.1. et B.2. sont indiquées dans le Tableau 1.

Il est ainsi constaté que les films tricouche des exemples 1 et 2, qui peuvent être fabriqués par co-extrusion à une température de 190°C, présentent, après thermoscellage sur un support de PET, des propriétés d'ouverture facile, et de refermeture substantiellement hermétique, de même niveau que le film tricouche de référence de l'exemple B qui a été thermoscellé sur une couche de PE.

## Revendications

1. Film multicouche comprenant :
- une couche adhésive A d'épaisseur allant de 7 à 50 µm et constituée par une composition auto-adhésive thermofusible extrudable a qui a un indice d'écoulement (ou MFI), mesuré pour une température de 190°C et un poids total de 2,16 kg, allant de 0,01 à 200 g/10 minutes et qui comprend, sur la base du poids total de ladite composition a :
- de 40 à 70 % en poids d'une composition a1 de copolymères blocs styréniques comprenant au moins un bloc élastomère, ladite composition a1 étant constituée, sur la base de son poids total :
- de 30 à 90 % en poids d'au moins un copolymère dibloc choisi dans le groupe comprenant les SI, SBI, SIB, SB, SEB, SEP, et
- de 10 à 70 % en poids d'au moins un copolymère tribloc choisi dans le groupe comprenant les SIS, SIBS, SBS, SEBS et SEPS ;
la teneur en motifs styréniques totale de ladite composition a1 variant de 10 à 40 % en poids sur la base du poids total de a1 ; et
- de 30 à 60 % en poids d'une ou plusieurs résines tackifiantes a2 ayant une température de ramollissement comprise entre 5 et 140 °C ;
- une couche mince complexable B constituée d'un matériau thermoplastique b; et
- une couche thermoscellable et sécable C ;
les couches B et C étant liées entre elles par la couche A ; et
ledit film étant **caractérisé en ce que** la couche C est constituée d'une composition c comprenant, sur la base du poids total de c, une teneur en poids d'au moins 95 % d'au moins un copolyester linéaire C1 obtenu par polycondensation d'une composition m de monomères comprenant :
- au moins un diol (i),
- au moins un composé (ii) choisi parmi l'acide téréphtalique ou un de ses dérivés diesters, éventuellement substitué par un radical alkyle, et
- au moins un composé (iii) choisi parmi un diacide carboxylique aromatique ou aliphatique ou un de ses dérivés diesters ou anhydrides ;
les quantités des monomères (i), (ii) et (iii) mises en oeuvre dans la polycondensation étant telles que la température de ramollissement de C1 est inférieure à 190 °C.

2. Film multicouche selon la revendication 1, **caractérisé en ce que** la température de ramollissement du copolyester linéaire C1 compris dans la composition c constitutive de la couche thermoscellable et sécable C, est inférieure à 180°C, et de préférence à 175°C.

3. Film multicouche selon l'une des revendications 1 ou 2, **caractérisé en ce que** le copolyester linéaire C1 est obtenu par polycondensation d'une composition m constituée, sur la base de teneurs exprimées en % molaire pour 100 moles de monomères, par :
- environ 50 % de diol (i),
- de 10 à 38 % de composé (ii), et
- de 12 à 40 % de composé (iii).

4. Film multicouche selon l'une des revendications 1 à 3, **caractérisé en ce que** l'on utilise comme diol (i) l'éthylène glycol.

5. Film multicouche selon l'une des revendications 1 à 4, **caractérisé en ce que** la composition a constitutive de la couche A présente un indice d'écoulement allant de 2 à 70 g/10 minutes.

6. Film multicouche selon l'une des revendications 1 à 5, **caractérisé en ce que** la composition a1 de copolymères blocs styréniques, comprise dans la composition a constitutive de la couche A, est constituée d'un copolymère tribloc SIS et d'un copolymère dibloc SI.

7. Film multicouche selon l'une des revendications 1 à 6, **caractérisé en ce que** la ou les résines a2 comprises dans la composition a constitutive de la couche A, sont choisies parmi :
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ; ou
- (iii) des résines terpéniques résultant de la polymérisation d'hydrocarbures terpéniques en présence de catalyseurs de Friedel-Crafts, éventuellement modifiées par action de phénols.

8. Film multicouche selon l'une des revendications 1 à 7, **caractérisé en ce que** la composition a constitutive de la couche A comprend :
- de 50 à 70 % de la composition a1 de copolymères blocs styréniques ; et
- de 30 à 50 % de résine tackifiante a2.

9. Film multicouche selon l'une des revendications 1 à 8, **caractérisé en ce qu'**il comprend également une couche de liaison D, reliant la couche A à la couche B, et/ou une couche de liaison E, reliant la couche A à la couche C.

10. Film multicouche selon l'une des revendications 1 à 9, **caractérisé en ce que** l'épaisseur de la couche A varie de 8 à 25 µm.

11. Procédé de fabrication du film multicouche tel que défini dans l'une des revendications 1 à 10, **caractérisé en ce qu'**il comprend la co-extrusion de la composition auto-adhésive thermofusible a et des compositions b et c, à une température comprise entre 150°C et 200°C.

12. Procédé de fabrication selon la revendication 11, **caractérisé en ce que** la co-extrusion est réalisée par soufflage de gaine.

13. Procédé de fabrication selon l'une des revendications 11 ou 12, **caractérisé en ce qu'**il comprend :
(i) l'introduction, dans des extrudeuses séparées, des compositions et matériaux constitutifs des couches A, B, C, et le cas échéant D et E, sous la forme de granulés de taille comprise entre 1 et 10 mm, puis
(ii) la transformation par chauffage desdits granulés à l'état de liquide visqueux, puis
(iii) le passage des flux correspondants à travers une tête d'extrusion comprenant un ensemble de filières annulaires coplanaires et concentriques portées chacune à une température inférieure à 200°C, de manière à former une bulle tubulaire à plusieurs couches, dont l'ordre des couches correspond à celui désiré pour le film final, puis
(iv) l'expansion radiale et l'étirement de la bulle, puis
(v) le refroidissement de ladite bulle.

14. Procédé de fabrication selon la revendication 13, **caractérisé en ce que** la tête d'extrusion mise en oeuvre à l'étape (iii) est une tête d'extrusion monobloc, dans laquelle les filières annulaires sont portées à une seule et même température inférieure à 200°C.

15. Emballage refermable comprenant :
- un réceptacle à base de PET qui est constitué ou bien de PET amorphe ou bien d'un système bicouche de PET amorphe et de PET semi-cristallin, ledit réceptacle présentant un fond plan et un pourtour en forme de bande plane, et
- un opercule constitué du film multicouche tel que défini dans l'une des revendications 1 à 10, dont la couche thermoscellable et sécable (C) est thermoscellée sur le pourtour du réceptacle, au contact de PET amorphe.

## Patentansprüche

1. Mehrschichtfolie, umfassend:
- eine Haftschicht A mit einer Dicke im Bereich von 7 bis 50 µm, bestehend aus einer extrudierbaren selbstklebenden Heißschmelzzusammensetzung a, die einen Schmelzindex (oder MFI), gemessen bei einer Temperatur von 190 °C, und einem Gesamtgewicht von 2,16 kg, im Bereich von 0,01 bis 200 g/10 Minuten aufweist, die, bezogen auf das Gesamtgewicht der Zusammensetzung a umfasst:
- 40 bis 70 Gew.-% einer Zusammensetzung a1 aus Styrolblockcopolymeren, umfassend mindestens einen Elastomerblock, wobei die Zusammensetzung a1, bezogen auf ihr Gesamtgewicht, besteht aus:
- 30 bis 90 Gew.-% mindestens eines Zweiblockcopolymers, ausgewählt aus der Gruppe umfassend SI, SBI, SIB, SB, SEB, SEP, und
- 10 bis 70 Gew.-% mindestens eines Dreiblockcopolymers, ausgewählt aus der Gruppe umfassend SIS, SIBS, SBS, SEBS und SEPS;
wobei der Gesamtanteil an Styroleinheiten der Zusammensetzung a1 im Bereich von 10 bis 40 Gew.-% liegt, bezogen auf das Gesamtgewicht von a1; und
- 30 bis 60 Gew.-% eines oder mehrerer haftklebriger Harze a2 mit einer Erweichungstemperatur zwischen 5 und 140 °C;
- eine komplexierbare dünne Schicht B, bestehend aus einem Thermoplast b; und
- eine heißsiegelbare und teilbare Schicht C;
wobei die Schichten B und C durch die Schicht A miteinander verbunden sind; und
die Folie **dadurch gekennzeichnet ist, dass** die Schicht C aus einer Zusammensetzung c besteht, die, bezogen auf das Gesamtgewicht von c, einen Gewichtsanteil von mindestens 95 % mindestens eines linearen Copolyesters C1 umfasst, der durch Polykondensation einer Monomerzusammensetzung m erhalten wird, umfassend:
- mindestens ein Diol (i),
- mindestens eine Verbindung (ii) ausgewählt aus Terephthalsäure oder einem Diesterderivat davon, gegebenenfalls substituiert mit einem Alkylrest, und
- mindestens eine Verbindung (iii), ausgewählt aus einer aromatischen oder aliphatischen Dicarbonsäure oder einem Diester- oder Anhydridderivat davon;
wobei die Mengen der bei der Polykondensation verwendeten Monomere (i), (ii) und (iii) derart sind, dass die Erweichungstemperatur von C1 unter 190 °C liegt.

2. Mehrschichtfolie nach Anspruch 1, **dadurch gekennzeichnet, dass** die Erweichungstemperatur des linearen Copolyesters C1, der in der Zusammensetzung c enthalten ist, aus der die heißsiegelbare und teilbare Schicht C besteht, unter 180 °C und vorzugsweise unter 175 °C liegt.

3. Mehrschichtfolie nach einem der Ansprüche 1 oder 2, **dadurch gekennzeichnet, dass** der lineare Copolyester C1 durch Polykondensation einer Zusammensetzung m erhalten wird, die bezogen auf die Anteile, ausgedrückt als Mol-% pro 100 Mol Monomere, besteht aus:
- etwa 50 % Diol (i),
- 10 bis 38 % Verbindung (ii) und
- 12 bis 40 % Verbindung (iii).

4. Mehrschichtfolie nach einem der Ansprüche 1 bis 3, **dadurch gekennzeichnet, dass** als Diol (i) Ethylenglykol verwendet wird.

5. Mehrschichtfolie nach einem der Ansprüche 1 bis 4, **dadurch gekennzeichnet, dass** die Zusammensetzung a, aus der die Schicht A besteht, einen Schmelzindex von 2 bis 70 g/10 Minuten aufweist.

6. Mehrschichtfolie nach einem der Ansprüche 1 bis 5, **dadurch gekennzeichnet, dass** die Zusammensetzung a1 aus Styrolblockcopolymeren, die in der Zusammensetzung a, aus der die Schicht A besteht, enthalten ist, aus einem SIS-Triblockcopolymer und einem SI-Diblockcopolymer besteht.

7. Mehrschichtfolie nach einem der Ansprüche 1 bis 6, **dadurch gekennzeichnet, dass** das oder die Harze a2, die in der Zusammensetzung a, aus der die Schicht A besteht, enthalten sind, ausgewählt sind aus:
- (ii) Harzen, die durch Hydrierung, Polymerisation oder Copolymerisation (mit einem aromatischen Kohlenwasserstoff) von ungesättigten aliphatischen Kohlenwasserstoffgemischen mit etwa 5, 9 oder 10 Kohlenstoffatomen, die aus Erdölfraktionen stammen, erhalten werden; oder
- (iii) Terpenharzen, die aus der Polymerisation von Terpenkohlenwasserstoffen in Gegenwart von Friedel-Crafts-Katalysatoren resultieren, die gegebenenfalls durch Einwirkung von Phenolen modifiziert werden.

8. Mehrschichtfolie nach einem der Ansprüche 1 bis 7, **dadurch gekennzeichnet, dass** die Zusammensetzung a, aus der die Schicht A besteht, umfasst:
- 50 bis 70 % der Zusammensetzung a1 aus Styrolblockcopolymeren; und
- 30 bis 50 % haftklebriges Harz a2.

9. Mehrschichtfolie nach einem der Ansprüche 1 bis 8, **dadurch gekennzeichnet, dass** sie außerdem eine Verbindungsschicht D umfasst, die die Schicht A mit der Schicht B verbindet, und/oder eine Verbindungsschicht E, die die Schicht A mit der Schicht C verbindet.

10. Mehrschichtfolie nach einem der Ansprüche 1 bis 9, **dadurch gekennzeichnet, dass** die Dicke der Schicht A im Bereich von 8 bis 25 *µ*m liegt.

11. Verfahren zur Herstellung der Mehrschichtfolie nach einem der Ansprüche 1 bis 10, **dadurch gekennzeichnet, dass** sie die Coextrusion der selbstklebenden Heißschmelz-Zusammensetzung a und der Zusammensetzungen b und c, bei einer Temperatur zwischen 150 °C und 200 °C umfasst.

12. Herstellungsverfahren nach Anspruch 11, **dadurch gekennzeichnet, dass** die Coextrusion durch Blasformen durchgeführt wird.

13. Herstellungsverfahren nach einem der Ansprüche 11 oder 12, **dadurch gekennzeichnet, dass** es umfasst:
(i) das Einführen, in getrennte Extruder, der Zusammensetzungen und Materialien, aus denen die Schichten A, B, C und gegebenenfalls D und E bestehen, in Form von Granulaten mit einer Größe zwischen 1 und 10 mm, dann
(ii) das Umwanden durch Erhitzen des Granulats in den viskosen flüssigen Zustand, dann
(iii)das Hindurchleiten der jeweiligen Ströme durch einen Extrusionskopf, der einen Satz von koplanaren und konzentrischen Ringdüsen umfasst, die jeweils auf eine Temperatur unter 200 °C gebracht wurden, um einen röhrenförmigen Schlauch aus mehreren Schichten zu bilden, wobei die Reihenfolge der Schichten der für den fertigen Film gewünschten Reihenfolge entspricht, dann
(iv) das radiale Expandieren und das Dehnen des Schlauchs, dann
(v) das Abkühlen des Schlauchs.

14. Herstellungsverfahren nach Anspruch 13, **dadurch gekennzeichnet, dass** der in Schritt (iii) verwendete Extrusionskopf ein einteiliger Extrusionskopf ist, bei dem die Ringdüsen auf ein und dieselbe Temperatur unter 200 °C gebracht werden.

15. Wiederverschließbare Verpackung, umfassend:
- einen Behälter auf PET-Basis, der entweder aus amorphem PET oder einem Doppelschichtsystem aus amorphem PET und aus teilkristallinem PET besteht, wobei der Behälter einen flachen Boden und einen Umfang in Form eines flachen Bandes aufweist, und
- einen Deckel, bestehend aus der Mehrschichtfolie nach einem der Ansprüche 1 bis 10, wobei die heißsiegelbare und teilbare Schicht (C) am Umfang des Behälters in Kontakt mit amorphem PET heißgesiegelt ist.

## Claims

1. Multilayer film comprising:
- an adhesive layer A having a thickness ranging from 7 to 50 µm and consisting of an extrudable hot-melt self-adhesive composition a which has a melt flow index (or MFI), measured for a temperature of 190°C and a total weight of 2.16 kg, ranging from 0.01 to 200 g/10 minutes and which comprises, on the basis of the total weight of said composition a:
- from 40% to 70% by weight of a composition a1 of styrene block copolymers comprising at least one elastomer block, said composition a1 consisting, on the basis of its total weight:
- of 30% to 90% by weight of at least one diblock copolymer chosen from the group comprising SI, SBI, SIB, SB, SEB and SEP, and
- of 10% to 70% by weight of at least one triblock copolymer chosen from the group comprising SIS, SIBS, SBS, SEBS and SEPS;
the total content of styrene units of said composition a1 ranging from 10% to 40% by weight on the basis of the total weight of a1; and
- from 30% to 60% by weight of one or more tackifying resins a2 having a softening temperature of between 5 and 140°C;
- a complexable thin layer B consisting of a thermoplastic b; and
- a heat-sealable and cleavable layer C;
the layers B and C being linked to one another by the layer A; and
said film being **characterized in that** the layer C consists of a composition c comprising, on the basis of the total weight of c, a content by weight of at least 95% of at least one linear copolyester C1 obtained by polycondensation of a composition m of monomers comprising:
- at least one diol (i),
- at least one compound (ii) chosen from terephthalic acid or a diester derivative thereof, optionally substituted with an alkyl radical, and
- at least one compound (iii) chosen from an aromatic or aliphatic dicarboxylic acid or a diester or anhydride derivative thereof;
the amounts of the monomers (i), (ii) and (iii) used in the polycondensation being such that the softening temperature of C1 is below 190°C.

2. Multilayer film according to Claim 1, **characterized in that** the softening temperature of the linear copolyester C1 included in the constituent composition c of the heat-sealable and cleavable layer C is below 180°C and preferably below 175°C.

3. Multilayer film according to either of Claims 1 and 2, **characterized in that** the linear copolyester C1 is obtained by polycondensation of a composition m consisting, on the basis of contents expressed as mol% per 100 mol of monomers, of:
- approximately 50% of diol (i),
- from 10% to 38% of compound (ii), and
- from 12% to 40% of compound (iii).

4. Multilayer film according to one of Claims 1 to 3, **characterized in that** ethylene glycol is used as diol (i) .

5. Multilayer film according to one of Claims 1 to 4, **characterized in that** the constituent composition a of the layer A has a melt flow index ranging from 2 to 70 g/10 minutes.

6. Multilayer film according to one of Claims 1 to 5, **characterized in that** the composition a1 of styrene block copolymers included in the constituent composition a of the layer A consists of an SIS triblock copolymer and of an SI diblock copolymer.

7. Multilayer film according to one of Claims 1 to 6, **characterized in that** the resin(s) a2 included in the constituent composition a of the layer A are chosen from:
- (ii) resins obtained by hydrogenation, polymerization or copolymerization (with an aromatic hydrocarbon) of mixtures of unsaturated aliphatic hydrocarbons having approximately 5, 9 or 10 carbon atoms resulting from petroleum fractions; or
- (iii) terpene resins resulting from the polymerization of terpene hydrocarbons in the presence of Friedel-Crafts catalysts, which are optionally modified by the action of phenols.

8. Multilayer film according to one of Claims 1 to 7, **characterized in that** the constituent composition a of the layer A comprises:
- from 50% to 70% of the composition a1 of styrene block copolymers; and
- from 30% to 50% of tackifying resin a2.

9. Multilayer film according to one of Claims 1 to 8, **characterized in that** it also comprises a tie layer D, connecting the layer A to the layer B, and/or a tie layer E, connecting the layer A to the layer C.

10. Multilayer film according to one of Claims 1 to 9, **characterized in that** the thickness of the layer A ranges from 8 to 25 µm.

11. Process for producing the multilayer film as defined in one of Claims 1 to 10, **characterized in that** it comprises the co-extrusion of the hot-melt self-adhesive composition a and of the compositions b and c, at a temperature of between 150°C and 200°C.

12. Production process according to Claim 11, **characterized in that** the co-extrusion is carried out by blow-molding.

13. Production process according to either of Claims 11 and 12, **characterized in that** it comprises:
(i) the introduction, into separate extruders, of constituent compositions and materials of the layers A, B, C, and where appropriate D and E, in the form of granules having a size of between 1 and 10 mm, then
(ii) the conversion by heating of said granules to the viscous liquid state, then
(iii) the passing of the corresponding streams through an extrusion head comprising a set of coplanar and concentric annular dies, each brought to a temperature below 200°C, so as to form a tubular bubble comprising several layers, in which the order of the layers corresponds to that desired for the final film, then
(iv) the radial expansion and the drawing of the bubble, then
(v) the cooling of said bubble.

14. Production process according to Claim 13, **characterized in that** the extrusion head used in step (iii) is a monoblock extrusion head, in which the annular dies are brought to one and the same temperature below 200°C.

15. Resealable packaging comprising:
- a PET-based receptacle which consists either of amorphous PET or of a bilayer system of amorphous PET and of semicrystalline PET, said receptacle having a flat bottom and a perimeter in the form of a flat band, and
- a seal consisting of the multilayer film as defined in one of Claims 1 to 10, the heat-sealable and cleavable layer (C) of which is heat-sealed on the perimeter of the receptacle, in contact with amorphous PET.
